# EUROPÄISCHE PATENTANMELDUNG

(11) **EP 0 891 068 A2**
(43) Veröffentlichungstag der Anmeldung: **13.01.1999**
(21) Anmeldenummer: 98112891.1
(22) Anmeldetag: 10.07.1998
(51) Int. Cl.: H04M 3/36, H04M 15/00

(54) **Erkennung eines betrügerischen Anrufs mittels eines neuronalen Netzes**

(30) Priorität: 10.07.1997 DE 19729631
(71) Anmelder: SIEMENS AKTIENGESELLSCHAFT, 80333 München (DE)
(72) Erfinder: Taniguchi, Michiaki, 80469 München (DE); Tresp, Volker, Dr., 80539 München (DE)

(57) **Zusammenfassung**

Es wird ein Verfahren beschrieben, das die Erkennung eines betrügerischen Anrufs aus einem Kommunikationsnetz mittels eines neuronalen Netzes ermöglicht, indem eine Änderung im Anrufverhalten des Teilnehmers durch das neuronale Netz festgestellt und somit auf den Betrug rückgeschlossen wird. Das neuronale Netz wird überwacht trainiert, d.h. vorgegebene Eingangsgrößen werden durch das neuronale Netz auf eine vorgegebene Ausgangsgröße abgebildet.

## Beschreibung

Die Erfindung betrifft eine Erkennung eines Betrugs anhand eines zu einem Anruf aus einem Kommunikationsnetz gehörenden Abrechnungsdatensatzes mittels eines neuronalen Netzes.

Durch betrügerische Anrufe, also Anrufe, für die nichts bezahlt wird, entsteht den Betreibern von Kommunikationsnetzen, z.B. Mobilfunknetzen, ein beträchtlicher wirtschaftlicher Schaden.

Es sind vielerlei Szenarien für einen Betrug denkbar. Ein Szenario ist beispielsweise das unlautere Verkaufen von Anrufen (Call-Selling-Problem), bei dem Anrufe, typscherweise ins Ausland, vom Betrüger an Dritte günstig weiterverkauft werden. Der betroffene Betreiber des Kommunikationsnetzes erhält jedoch nie die angefallenen Kosten für die über den Betrüger abgewickelten Anrufe erstattet, da der Betrüger zur Vergebührung nicht mehr greifbar ist.

Aufbau, Funktion und Wirkungsweise neuronaler Netze sind dem Fachmann hinlänglich bekannt.

In [1] wird ein Multilayer-Perceptron erläutert.

Die Aufgabe der Erfindung besteht darin, einen Betrug zu erkennen, der auf einem nicht autorisierten Anruf basiert, indem mittels eines neuronalen Netzes eine den Betrug bedingende Änderung im Anrufverhalten eines Teilnehmers angezeigt wird.

Diese Aufgabe wird gemäß den Merkmalen des Patentanspruchs 1 gelöst.

Problematisch ist die Erkennung eines Betrugs, der nicht offensichtlich ist und dem Betreiber des Kommunikationsnetzes nicht von alleine auffällt. Dieser verdeckte Betrug ist nicht sofort erkennbar, sondern muß über einen bestimmten Zeitabschnitt aus dem beobachteten Verhalten eines Teilnehmers des Kommunikationsnetzes bestimmt werden. Tritt eine auffällige Verhaltensänderung des Teilnehmers über einen vorgegebenen Zeitraum auf, so kann mit einer bestimmten Wahrscheinlichkeit auf einen betrügerischen Anruf rückgeschlossen werden. Dazu ist für jeden Teilnehmer ein spezielles Benutzerprofil nötig, das dessen typisches Anrufverhalten beschreibt. Dabei ist ein Betrug eine Abweichung von diesem Anrufverhalten.

Bei jedem Anruf aus einem Kommunikationsnetz fällt ein Abrechnungsdatensatz an, der verschiedene, für die Erkennung eines Betrugs nützliche Daten, enthält. Als Eingangsgrößen für das neuronale Netz dienen insbesondere Werte aus dem zu dem aktuellen Anruf gehörenden Abrechnungsdatensatz und aus Abrechnungsdatensätzen zurückliegender Anrufe. Ein Anrufverhalten eines Teilnehmers ergibt sich aus den Werten seiner Abrechnungsdatensätze.

Eine Ausgangsgröße des neuronalen Netzes gibt ein Maß dafür an, daß der aktuelle Anruf einen Betrug darstellt. Der Betrug wird als solcher angezeigt, falls die Ausgangsgröße des neuronalen Netzes einen vorgebbaren Wert überschreitet, ansonsten wird der aktuelle Anruf nicht als Betrug gewertet.

Das neuronale Netz wird vorzugsweise vor Eingabe der Eingangsgrößen trainiert, indem eine Menge vorgegebener Abrechnungsdatensätze, aus denen bekannt ist, ob der jeweilige Anruf ein Betrug ist oder nicht, in das neuronale Netz eingegeben werden und das neuronale Netz entsprechend der vorgegebenen Ausgangsgröße (Betrug oder nicht Betrug) trainiert wird.

Als eine Weiterbildung der Erfindung sind Eingangsgrößen für das neuronale Netz verschiedene Werte aus den Abrechnungsdatensätzen, sowohl einzeln oder in vorgegebener Kombination untereinander, wobei der Abrechnungsdatensatz des aktuellen Anrufs ebenso wie Abrechnungsdatensätze zurückliegender Anrufe Berücksichtigung finden:
a) eine Dauer eines nationalen und/oder eines internationalen Anrufs;
b) Anzahlen der in einer vorgebbaren Zeit durchgeführten nationalen und/oder internationalen Anrufe;
c) eine kumulierte Dauer der nationalen und/oder internationalen Anrufe;
d) eine mittlere Gesprächsdauer über die vorgebbare Zeit;
e) eine maximale Gesprächsdauer über die vorgebbare Zeit;
f) eine Varianz der Gesprächsdauer für die vorgebbare Zeit.

Die vorstehend aufgezählten Werte sind nicht einschränkend oder als ausschließlich zu verwendende Werte zu verstehen. Es können beliebige Werte aus Abrechnungsdatensätzen atomar oder unter Berücksichtigung von Zusammenhängen, insbesondere mit Abrechnungsdatensätzen zurückliegender Anrufe, kombiniert und als Eingangsgrößen für das neuronale Netz verwendet werden.

Werden Abrechnungsdatensätze zurückliegender Anrufe mitberücksichtigt, so kann die Zeitdauer für zu berücksichtigende zurückliegende Anrufe statisch oder dynamisch innerhalb eines vorgebbaren Wertebereichs variiert werden.

Entscheidend ist, daß aus einer vorgegebenen Menge von Eingangsgrößen die Bewertung des aktuellen Anrufs als Betrug oder Nichtbetrug (Ausgangsgröße) gegeben ist.

Eine andere Weiterbildung der Erfindung besteht darin, die Eingangsgrößen unterschiedlichen Tageszeiten zuzuordnen. Eine mögliche Unterteilung in Tageszeiten unterscheidet Tag, Abend und Nacht.

Ferner ist im Rahmen einer zusätzlichen Weiterbildung der Erfindung, ein Multilayer-Perceptron als neuronales Netz zu verwenden.

Eine andere Weiterbildung der Erfindung besteht darin, während eines vorgebbaren Zeitabschnitts Abrechnungsdatensätze zu sammeln und mittels der Ausgangsgröße des neuronalen Netzes nach Ablauf des vorgebbaren Zeitabschnitts für die Abrechnungsdatensätze die Wahrscheinlichkeit dafür zu bestimmen, daß in dem vorgebbaren Zeitabschnitt ein Betrug durchgeführt wurde.

Eine Weiterbildung ist es, mehrere Teilnehmer, die ein vergleichbares Anrufverhalten aufweisen, in einer Gruppe zusammenzufassen und das Benutzerprofil dieser Gruppe in dem neuronalen Netz zu trainieren.

Auch kann das neuronale Netz nach dem Training adaptiert werden.

Weiterbildungen der Erfindung ergeben sich auch aus den abhängigen Ansprüchen.

Ausführungsbeispiele der Erfindung werden nachfolgend anhand der Zeichnungen dargestellt und erläutert.

Es zeigen
- Fig.1: ein Blockdiagramm, das Schritte eines Verfahrens zur Erkennung eines betrügerischen Anrufs aus einem Kommunikationsnetz enthält,
- Fig.2: eine Skizze, die die Funktionsweise des Verfahrens zur Erkennung des betrügerischen Anrufs angibt.

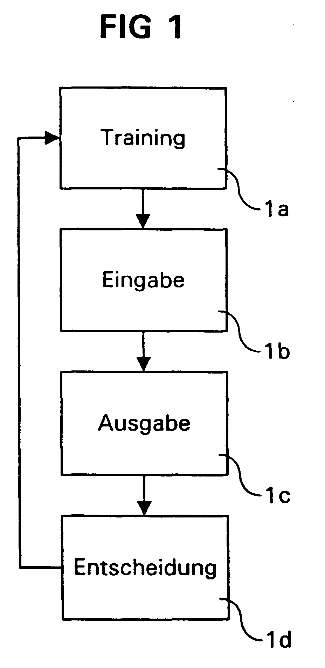

In **Fig.1** ist ein Blockdiagramm dargestellt, das Schritte 1a bis 1d eines Verfahrens zur Erkennung eines betrügerischen Anrufs enthält. Ein Anruf aus einem Kommunikationsnetz, der nicht von einem zahlenden Teilnehmer ausgeht, wird mittels eines neuronalen Netzes erkannt als ein Betrug. Dabei reflektiert der betrügerische Anruf nicht das Anrufverhalten des Teilnehmers oder einer Gruppe von Teilnehmern mit ähnlichem Anrufverhalten. Dies wird von einem neuronalen Netz, das mit auf das Anrufverhalten des Teilnehmers trainiert wurde, erkannt.

Jeder Anruf aus dem Kommunikationsnetz verursacht einen Abrechnungsdatensatz, der verschiedene Werte, u.a.
a) eine Identifikationsnummer des Teilnehmers;
b) eine Dauer des Gesprächs;
c) Information darüber, ob der Anruf im Inland bleibt oder ins Ausland geht (Unterscheidung: national/international);
d) eine Startzeit des Gesprächs.

Aus diesen Daten, die bei jedem Anruf aus dem Kommunikationsnetz anfallen, werden für einen vorgegebenen Zeitabschnitt kumulierte Werte ermittelt, u.a.:
a) eine Anzahl nationaler und internationaler Anrufe;
b) eine absolute Dauer und eine relative Dauer sowohl der nationalen als auch der internationalen Anrufe;
c) eine mittlere Gesprächsdauer;
d) eine Varianz der Gesprächsdauer;
e) eine maximale Gesprächsdauer für den vorgegebenen Zeitabschnitt.

Entsprechend dem vorgegebenen Zeitraum werden mit Hilfe dieser Daten Statistiken für den Teilnehmer geführt, wobei zusätzlich unterschiedliche Tageszeiten (Tag, Abend und Nacht) berücksichtigt werden.

Die beschriebenen Werte dienen als Eingangsgrößen des neuronalen Netzes, mit dessen Hilfe der Betrug erkannt wird als eine Abweichung vom Anrufverhalten des Teilnehmers.

In Schritt 1a wird das neuronale Netz trainiert. Da zum Zeitpunkt des Trainierens Abrechnungsdatensätze vorliegen, von denen bekannt ist, daß bestimmte Kombinationen von Eingangsgrößen einen Betrug kennzeichnen und andere Kombinationen der Eingangsgrößen keinen Betrug kennzeichnen, wird das neuronale Netz überwacht trainiert, d.h. das neuronale Netz lernt vorgegebene Eingangsgrößen einer bekannten Ausgangsgröße (Betrug oder nicht Betrug) zuzuordnen. Die zum überwachten Trainieren des neuronalen Netzes verwendeten Abrechnungsdatensätze stellen zweckmäßig reale Daten aus Kommunikationsnetzen dar, die signifikant einen Betrug oder keinen Betrug kennzeichnen.

Ein wirkungsvolles Training zum Betrieb des neuronalen Netzes wird in etwa mit gleichen Mengen vorgegebenen Abrechnungsdatensätzen zu jeder möglichen Ausgangsgröße (also in etwa gleiche Anzahl Trainingsdaten zur Kategorie 'Betrug' wie zur Kategorie 'nicht Betrug') durchgeführt.

Das Trainieren des neuronalen Netzes (Schritt 1a) wird mittels eines Quasi-Newton-Optimierungsalgorithmus mit "Weight Decay" [2] durchgeführt. Eine bevorzugte Architektur des neuronalen Netzes ist das Multilayer-Perceptron [1].

Nach dem Training ermittelt das neuronale Netz für jeden Anruf eine Reihe von Eingangsgrößen, die auf dem Abrechnungsdatensatz des aktuellen Anrufs und auf Abrechnungsdatensätzen zurückliegender Anrufe unter Berücksichtigung einer vorgegebenen Zeitdauer für das Zurückliegen der Anrufe basieren. Diese Eingangsgrößen werden in das neuronale Netz eingegeben (Schritt 1b).

Das trainierte neuronale Netz ordnet den Eingangsgrößen eine Klassifikationsmaß für das Auftreten eines Betrugs zu (Schritt 1c). Der Betrug wird als solcher erkannt, wenn die Wahrscheinlichkeit oberhalb einer vorgebbaren Schranke liegt. Ansonsten handelt es sich um einen autorisierten Anruf des rechtmäßigen Teilnehmers (aus Sicht des neuronalen Netzes) und es wird kein Betrug angezeigt (siehe Schritt 1d).

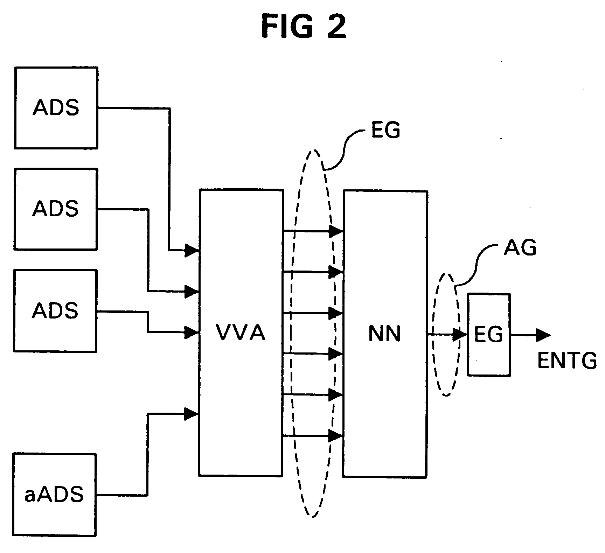

In **Fig.2** wird die Funktionsweise des Verfahrens zur Erkennung des Betrugs mittels eines neuronalen Netzes dargestellt. Jeder Anruf resultiert in einem Abrechnungsdatensatz ADS, wobei für den aktuell abgehenden Anruf ein aktueller Abrechnungsdatensatz aADS angelegt wird. Die Daten aus den Abrechnungsdatensätzen (ADS und aADS) werden in einer Vorverarbeitung VVA auf Eingangsgrößen EG für das neuronale Netz NN abgebildet. Die Ausgabegröße AG des neuronalen Netzes kennzeichnet die Wahrscheinlichkeit dafür, daß der aktuelle Anruf einem Betrug entspricht. Ein Schwellwertvergleich EG gibt die Entscheidung ENTG aus, ob der vorliegende Anruf ein Betrug ist oder nicht, indem die Ausgangsgröße AG, also die Wahrscheinlichkeit mit einer vorgebbaren Schranke (Schwellwert) verglichen wird und der aktuelle Anruf einem Betrug zugeordnet wird, falls die Ausgangsgröße AG des neuronalen Netzes NN größer als die vorgebbare Schranke ist, oder es wird nicht auf Betrug entschieden, falls die Ausgangsgröße AG kleiner als die vorgebbare Schranke ist.

### Literaturverzeichnis:

[1] D. E. Rumelhart, G. E. Hinton and R. J. Williams: Learning internal representations by error propagation; Parallel Distributed Processing: Explorations in the Microstructure of Cognition, Vol.1, D. E. Rumelhart and J. L. Mcclelland (Eds.), Cambridge, MA: MIT Press, pp.318ff.
[2] Josef Stoer: Einführung in die Numerische Mathematik I, Springer Verlag Berlin 1983, 4.Auflage, S.279-281

## Patentansprüche

1. Verfahren zur Erkennung eines Betrugs anhand eines aus einem Anruf resultierenden Abrechnungsdatensatzes mittels eines neuronalen Netzes, bei dem
a) aus dem Abrechnungsdatensatz sowie aus Abrechnungsdatensätzen zurückliegender Anrufe gewonnene Eingangsgrößen in das neuronale Netz eingegeben werden,
b) eine Ausgangsgröße des neuronalen Netzes eine Wahrscheinlichkeit für den Betrug angibt,
c) der Betrug erkannt wird als existent, falls die Ausgangsgröße einen vorgebbaren Wert überschreitet, und bei dem der Betrug erkannt wird als nicht existent, falls die Ausgangsgröße den vorgebbaren Wert nicht überschreitet.

2. Verfahren nach Anspruch 1,
bei dem das neuronale Netz vor Eingabe der Eingangsgrößen trainiert wird, indem eine Menge vorgegebener Abrechnungsdatensätze, aus denen bekannt ist, ob der Anruf autorisiert ist oder nicht (Ausgangsgröße), in das neuronale Netz eingegeben werden und das neuronale Netz entsprechend der Ausgangsgröße trainiert wird.

3. Verfahren nach Anspruch 1 oder 2,
bei dem als Eingangsgrößen für das neuronale Netz folgende Werte aus dem Abrechnungsdatensatz, der dem aktuellen Anruf entspricht, oder den Abrechnungsdatensätzen zurückliegender Anrufe dargestellt werden:
a) eine Dauer eines nationalen und/oder eines internationalen Anrufs;
b) Anzahlen der in einer vorgebbaren Zeit durchgeführten nationalen und/oder internationalen Anrufe;
c) eine kumulierte Dauer der nationalen und/oder internationalen Anrufe;
d) eine mittlere Gesprächsdauer über die vorgebbare Zeit;
e) eine maximale Gesprächsdauer über die vorgebbare Zeit.

4. Verfahren nach Anspruch 3,
bei dem die Eingangsgrößen in unterschiedliche Tageszeiten zugeordnet werden.

5. Verfahren nach Anspruch 4,
bei dem die unterschiedlichen Tageszeiten folgender Unterteilung entsprechen:
a) Tag;
b) Abend;
c) Nacht.

6. Verfahren nach einem der Ansprüche 1 bis 5,
bei dem das neuronale Netz ein Multilayer-Perceptron ist.

7. Verfahren nach einem der vorhergehenden Ansprüche,
bei dem über einen vorgebbaren Zeitabschnitt Abrechnungsdatensätze gesammelt werden und die Ausgangsgröße des neuronalen Netzes nach Ablauf des vorgebbaren Zeitabschnitts für die Abrechnungsdatensätze die Wahrscheinlichkeit dafür angibt, daß in dem vorgebbaren Zeitabschnitt ein betrügerischer Anruf durchgeführt wurde.

8. Verfahren nach einem der vorhergehenden Ansprüche,
bei dem mehrere Teilnehmer, die ein vergleichbares Anrufverhalten aufweisen, zu einer Gruppe zusammengefaßt werden und somit das Benutzerprofil der Gruppe in dem neuronalen Netz trainiert wird.

9. Verfahren nach einem der vorhergehenden Ansprüche,
bei dem das neuronale Netz nach dem Training adaptiert wird anhand der ermittelten Wahrscheinlichkeiten für einen betrügerischen Anruf.
